(19)

**Europäisches Patentamt**
**European Patent Office**
**Office européen des brevets**

(11) **EP 3 901 195 A1**

(12) **EUROPEAN PATENT APPLICATION**
published in accordance with Art. 153(4) EPC

(43) Date of publication:
**27.10.2021 Bulletin 2021/43**

(51) Int Cl.:
**C08J 3/16** *(2006.01)*     **C08B 5/00** *(2006.01)*

(21) Application number: **19899898.1**

(86) International application number:
**PCT/JP2019/048997**

(22) Date of filing: **13.12.2019**

(87) International publication number:
**WO 2020/129855 (25.06.2020 Gazette 2020/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.12.2018 JP 2018235981**
         **06.12.2019 JP 2019220872**
         **11.12.2019 JP 2019223988**

(71) Applicant: **Marusumi Paper Co., Ltd.**
**Shikokuchuo-shi, Ehime, 799-0196 (JP)**

(72) Inventor: **HIASA, Shou**
**Shikokuchuo-shi, Ehime 799-0196 (JP)**

(74) Representative: **Plougmann Vingtoft a/s**
**Strandvejen 70**
**2900 Hellerup (DK)**

(54) **PRODUCTION METHOD FOR DRY SOLID CONTAINING FINE CELLULOSE FIBERS, DRY SOLID CONTAINING FINE CELLULOSE FIBERS, REDISPERSION OF FINE CELLULOSE FIBERS**

(57)    [Object] The present invention provides a dry solid containing fine cellulose fibers having excellent redispersibility in a solvent such as water, and a simple production method for producing a dry solid containing fine cellulose fibers. Another object of the present invention is to provide a fine cellulose fiber redispersion liquid having excellent transparency and viscosity property. [Method for Achieving the Object] The dry solid containing fine cellulose fibers according to one embodiment of the present invention contains fine cellulose fibers having a sulfur introduction amount attributable to sulfo groups being 0.5 mmol/g or more. The production method of the dry solid containing fine cellulose fibers of the present invention comprises a drying step in which drying is performed at a relatively low temperature under a low pressure. The fine cellulose fiber redispersion liquid of the present invention contains the fine cellulose fiber redispersion liquid and water and has desirable redispersibility in terms of transparency, viscosity property, and precipitation property.

**FIG.1**

```
Chemical Treatment Step S1

    Contact Step S1A
         ↓
    (Drying Step)
         ↓
    Reaction Step S1B
         ↓
    (Washing Step)

         ⇩

Fibrillation Treatment Step S2

    (Sulfonated Fine Cellulose Fiber
     Dispersion Liquid)

         ⇩

    Drying Step S3

         ⇩

Dry Solid Containing Fine Cellulose
Fibers
```

EP 3 901 195 A1

**Description**

Technical Field

The present invention relates to a production method of a dry solid containing fine cellulose fibers having excellent redispersibility in water, a dry solid containing fine cellulose fibers, and a fine cellulose fiber redispersion liquid.

Background Art

Cellulose nanofibers (CNF) are microfibers having a fiber width in nanometer order and a fiber length of several 100 nanometers and are obtained by subjecting plant-derived cellulose to a nanonization treatment (mechanical fibrillation, TEMPO-catalyzed oxidation, or the like). Since CNF has a light weight, high elasticity, high strength, and low linear thermal expansion, the use of composite materials containing CNF is expected not only in the industrial field but also in other various fields such as the food field and the medical field.

CNF is obtained in a water-dispersed state since it is usually produced from plant-derived cellulose (pulp or the like) dispersed in water. This aqueous dispersion contains water in an amount of several times to several hundred times the weight of CNF in order to ensure the dispersion stability, thus causing various problems such as an increase in cost due to increase in energy and storage space during transportation, as well as limited use of CNF.

For this reason, it is desirable to subject the CNF to a treatment such as drying or aggregation at a high concentration; however, since CNFs are strongly bonded to each other by a hydrogen bond in the process of drying or concentration, it is difficult to restore the original CNF aqueous dispersion state (hereinafter also referred to as "redispersion") and exert the original characteristics of CNF (the characteristics are hereinafter referred to as "redispersibility"). The following patent documents attempted to solve this problem.

Patent Literature 1 discloses a method in which a cellulose nanofiber dry solid obtained by fibrillating chemically modified cellulose fibers is treated with hot water when the cellulose nanofiber dry solid is redispersed.

Citation List

Patent Literature

Patent Literature 1: Japanese Laid-Open Patent Publication No. 2017-2136

Disclosure of Invention

Technical Problem

However, the technique of Patent Literature 1 has problems such as energy cost due to the use of hot water and the necessity of multistage processes. Moreover, Patent Literature 1 nowhere describes sulfo groupintroduced fine cellulose fibers.

In view of the above circumstances, an object of the present invention is to provide a simple production method for producing a dry solid containing fine cellulose fibers excellent in redispersibility in solvents such as water, and to provide a dry solid containing fine cellulose fibers and a fine cellulose fiber redispersion liquid excellent in transparency and viscosity property.

Solution to Problem

The method for producing a dry solid containing fine cellulose fibers of the present invention is a method for producing a dry matter by drying fine cellulose fibers, the method performing a chemical treatment step of chemically treating pulp; a fibrillation treatment step of fibrillating the pulp resulting from the chemical treatment step into fine cellulose fibers having an average fiber width of 1 nm to 1000 nm; and a drying step of drying a mixture in which the fine cellulose fibers fibrillated in the fibrillation treatment step are dispersed in water so that the mixture has a moisture content of 80% or less, in this order, the chemical treatment step performing a contact step of bringing pulp fibers constituting the pulp into contact with a reaction solution containing sulfamic acid having sulfo groups and urea dissolved in water; and a step of supplying the pulp resulting from the contact step (excluding absolute-dry pulp treated by depressurized drying in a desiccator having anhydrous calcium chloride) to a reaction step and introducing sulfo groups into a part of hydroxyl groups of cellulose constituting the pulp fibers in the reaction step, in this order, wherein: the reaction step is a step of heating the pulp fibers in contact with the reaction solution resulting from the contact step, thereby allowing a reaction to proceed, the reaction temperature is adjusted to 100°C to 180°C, and the reaction time is adjusted to 1 minute or more, and in the drying step of drying the mixture, the drying temperature satisfies any one of the following conditions (1) to (3) in relation to a sulfur introduction amount attributable to the sulfo groups of the fine cellulose fibers:

(1) when the sulfur introduction amount is 0.5 mmol/g to 0.9 mmol/g (excluding 0.9 mmol/g), the drying temperature is 40°C or less;
(2) when the sulfur introduction amount is 0.9 mmol/g to 1.4 mmol/g (excluding 1.4 mmol/g), the drying temperature is 70°C or less; and
(3) when the sulfur introduction amount is 1.4 mmol/g to 3.0 mmol/g, the drying temperature is 120°C or less.

The dry solid containing fine cellulose fibers of the present invention is a dry matter of a mixture containing water and fine cellulose fibers obtained by fibrillating cellulose fibers into fibers having an average fiber width of 1 nm to 1000 nm. The fine cellulose fibers are sulfonated fine cellulose fibers in which sulfo groups are introduced into a part of the hydroxyl groups. An introduction amount of sulfur attributable to the sulfo groups is not less than 0.5 mmol/g and not more than 3.0 mmol/g. The viscosity of a dispersion liquid obtained by dispersing the dry matter in water so that a solid concentration of the fine cellulose fibers is 0.5% by weight is 500 mPa·s or more when the viscosity is measured by rotating the dispersion liquid for 3 minutes at 25°C at a rotation speed of 12 rpm using a Brookfield viscometer.
The fine cellulose fiber redispersion liquid of the present invention is in a state in which the dry solid containing fine cellulose fibers of the present invention is dispersed in water.

Advantageous Effects of Invention

According to the present invention, it is possible to provide a dry solid containing fine cellulose fibers excellent in redispersibility with a simple production method without using large heat energy or additives. In addition, it is possible to provide a fine cellulose fiber redispersion liquid having desirable redispersibility and excellent transparency and viscosity property when the dry solid containing fine cellulose fibers is redispersed in a solvent.

Brief Description of Drawings

FIG. 1 is a flow diagram illustrating a method for producing a dry solid containing fine cellulose fibers.
FIG. 2 is a diagram showing transparency and viscosity property of a sulfonated fine cellulose fiber dispersion liquid and a fine cellulose fiber redispersion liquid obtained by redispersion.
FIG. 3 is a diagram showing a precipitation property of a fine cellulose fiber redispersion liquid.
FIG. 4 is a diagram showing the precipitation property shown in FIG. 3 as a relationship between the sulfur introduction amount and the drying temperature.

Description of Embodiments

The dry solid containing fine cellulose fibers, the method for producing the dry solid containing fine cellulose fibers, and the fine cellulose fiber redispersion liquid of the present embodiment are described in this order below in detail.

1. Dry Solid Containing Fine Cellulose Fibers

The dry solid containing fine cellulose fibers according to the present embodiment contains fine cellulose fibers, and can be suitably produced by the production method described below. Specifically, the dry solid containing fine cellulose fibers is a dry matter of a mixture containing fine cellulose fibers. The dry solid containing fine cellulose fibers can be used as a fine cellulose fiber redispersion liquid obtained by being mixed with and redispersed in a solvent such as water.
The moisture content of the dry solid containing fine cellulose fibers is not particularly limited and is measured in accordance with JIS P 8203. The moisture content may be 80% or less, preferably not more than 80% and not less than 50%, more preferably 50% or less, more preferably 30% or less, further preferably 20% or less, and particularly preferably 10% or less. With a high moisture content, the problems related to an increase in energy or cost during transportation and an increase in space or cost during storage cannot be solved. The details are described later. The formula to determine the moisture content (%) is also described later.

Fine Cellulose Fibers

Fine cellulose fibers are microfibers obtained by subjecting a plant-derived raw cellulose material (pulp fiber) to a nanonization treatment (mechanical fibrillation, TEMPO-catalyzed oxidation, or the like). The fiber has crystallinity with a fiber width of nanometer order and a fiber length of several 100 nanometers, and has a light weight, high elasticity, high strength, and low linear thermal expansion.

In the present embodiment, a substituent is introduced into a part of the hydroxyl groups of the fine cellulose fibers. The substituent is preferably an ionic substituent (for example, sulfo group, carboxyl group, phosphoric acid group, phosphorous acid group, or other anionic groups or cationic groups). The ionic substituent is more preferably a sulfo group. By introducing ionic substituents, in view of an increase in hydrophilicity of fine cellulose fibers and generation of electrostatic repulsion between ions, it is possible to easily save energy during fibrillation and ensure stable dispersibility in the dispersion liquid in the production of the fine cellulose fiber dispersion liquid, and also contribute to permeation of water into the dry solid containing fine cellulose fibers obtained after drying, thereby improving redispersibility.

In the following, sulfonated fine cellulose fibers in which a part of the hydroxyl groups of the fine cellulose fiber is substituted with sulfo groups are described as a representative example.

Sulfonated Fine Cellulose Fibers

The sulfonated fine cellulose fibers are fine cellulose fibers obtained by fibrillating cellulose fibers, in which at least a part of hydroxyl groups (-OH groups) of the cellulose (a chain polymer formed of $\beta$ $(1 \rightarrow 4)$ glycosidically bonded D-glucose) constituting the fine cellulose fibers is substituted with sulfo groups (i.e., sulfonated) represented by the formula (1) below.

Sulfo Group

$$(-SO_3^-)_r \cdot Z^{r+} \qquad (1)$$

(wherein r is an independent natural number of 1 to 3; when r = 1, $Z^{r+}$ is at least one member selected from the group consisting of hydrogen ion, alkali metal cation, ammonium ion, aliphatic ammonium ion, and aromatic ammonium ion; when r = 2 or 3, $Z^{r+}$ is at least one member selected from the group consisting of cation of an alkaline earth metal or cation of a polyvalent metal.

Method for Producing Sulfonated Fine Cellulose Fibers

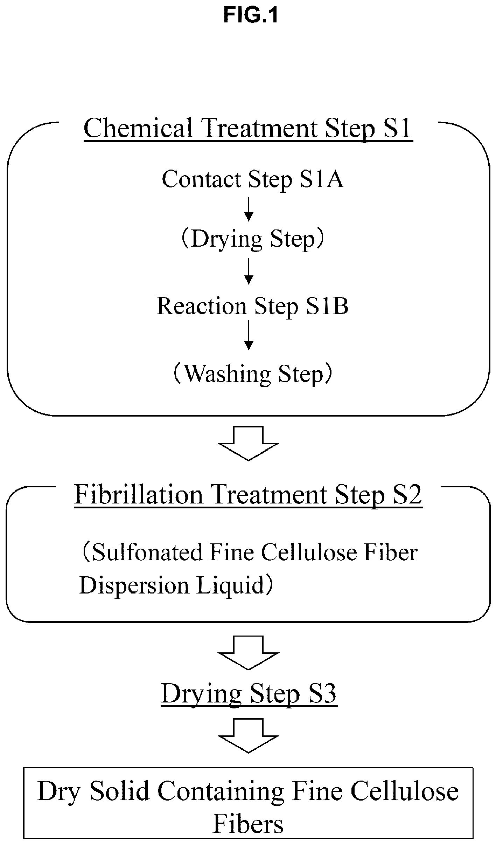

As shown in FIG. 1, the sulfonated fine cellulose fibers of the present embodiment can be obtained by performing a fibrillation treatment step S2 for physically performing mechanical fibrillation after a chemical treatment step S1 for introducing sulfo groups into pulp fibers.

It is also possible to produce sulfonated fine cellulose fibers by performing a chemical treatment after the pulp fibers are subjected to a fibrillation treatment; however, in view of reducing the energy required for fibrillation and lowering the production cost, and in view of easily obtaining fine cellulose fibers having a small and uniform fiber width, it is preferable to perform the fibrillation treatment step S2 after sulfo groups are introduced into the pulp fibers.

Chemical Treatment Step S1

The chemical treatment step S1 includes a contact step S1A of bringing pulp fibers into contact with a sulfonating agent having a sulfo group and urea and/or a derivative thereof, and a reaction step S1B of introducing sulfo groups into at least a part of the hydroxyl groups of the cellulose contained in the pulp fibers resulting from the contact step S1A.

Reaction Step S1B

The reaction step S1B in the chemical treatment step S1 of the sulfonated fine cellulose fiber production method of the present embodiment is a step of substituting the hydroxyl groups of the cellulose contained in a fiber raw material with the sulfo groups of the contacted sulfonating agent as described above so as to introduce the sulfo groups into the cellulose contained in the fiber raw material.

This reaction step S1B is not particularly limited insofar as the method can cause a sulfonation reaction that substitutes hydroxyl groups of the cellulose with sulfo groups. For example, by heating the fiber raw material impregnated with the reaction solution at a predetermined temperature, sulfo groups can be introduced into the cellulose contained in the fiber raw material.

The fiber raw material to be supplied in the reaction step S1B is not particularly limited insofar as it contains moisture as described above. For example, the fiber raw material to be supplied in the reaction step S1B may have a high moisture content obtained after the contact step S1A, may be subjected to a dehydration treatment or the like to lower the moisture content before being supplied to the reaction step S1B, or may be subjected to a drying treatment or the like to further lower the moisture content as described later. In other words, the fiber raw material to be supplied in the reaction step S1B is not particularly limited insofar as the fiber raw material is in a state other than a non-moisture state, that is, insofar as the fiber raw material is in a non-absolute dry state having a moisture content of 1% or more.

In the present specification, such a fiber raw material in a non-absolute dry state having a moisture content of 1% or more is referred to as a moisture-containing state (i.e., a wet state), and a fiber raw material in a state of being impregnated with a reaction solution, a fiber raw material in a state of being dehydrated to some extent, and a fiber raw material in a state of being dried to some extent are also referred to as a fiber raw material in a wet state.

In the present specification, the term "absolute dry" refers to a state in which the moisture content is lower than 1%. The drying treatment step to ensure an absolute dry state refers to a step of performing a drying treatment (depressurized drying treatment) by reducing the pressure using a desiccator or the like containing a drying agent such as calcium chloride, anhydrous calcium chloride, or diphosphorus pentoxide. More specifically, in the chemical treatment step S1 in the method for producing sulfonated fine cellulose fibers of the present embodiment, when the fiber raw material before being supplied in the reaction step S1B is subjected to a dehydration treatment or a drying treatment, the treatment (dehydration treatment or drying treatment) must be completed before the fiber raw material turns to an absolute dry state.

The moisture content (%) can be determined according to the following formula.

$$\text{Moisture content (\%)} = ((\text{mass of sample - solid mass of sample}) \,/\, \text{mass of sample}) \times 100$$

(The mass of the sample means the mass (g) of the sample subjected to the measurement (for example, in the above example, the fiber raw material at the time of being subjected to the reaction step S1B). The solid mass of the sample means the mass (g) of the solid substance left after drying the same amount of the sample subjected to the measurement in an atmosphere of 105 °C for 2 hours to a constant weight (for example, in the above example, the fiber raw material having a constant weight obtained after drying the fiber raw material to be supplied in the reaction step S1B)).

Reaction Temperature in Reaction Step S1B

The heating temperature in the reaction step S1B is not particularly limited insofar as it enables sulfo groups to be introduced into the cellulose constituting the fiber raw material while suppressing thermal decomposition or hydrolysis reaction of the fibers.

More specifically, any temperature to directly or indirectly heat the fiber raw material after the contact step S1A while satisfying the above requirements can be used. Examples of the methods for such heating include, for example, those using a known dryer, a depressurizing dryer, a microwave heating apparatus, an autoclave, an infrared heating apparatus, and the like. In particular, since a gas may be generated in the reaction step S1B, it is preferable to use a circulation air dryer.

The shape of the fiber raw material after the contact step S1A is not particularly limited. However, the reaction can be easily and uniformly advanced by heating the fiber raw material using the above-mentioned device or the like, for example, in a sheet shape or in a relatively disaggregated state.

The heating temperature in the reaction step S1B is not particularly limited insofar as the above requirements are satisfied. For example, the atmosphere temperature is preferably 250°C or less, more preferably 200°C or less, and further preferably 180°C or less. If the atmosphere temperature during the heating is higher than 250°C, thermal decomposition occurs as described above, or the discoloration of fibers is accelerated. On the other hand, if the heating temperature is lower than 100°C, the reaction time tends to increase.

Therefore, in view of workability, the heating temperature (specifically, the atmosphere temperature) during the heating is adjusted to not less than 100°C and not more than 250°C, more preferably not less than 100°C and not more than 200°C, and further preferably not less than 100°C and not more than 180°C.

Reaction Time in Reaction Step S1B

The heating time when the heating method described above is used as the reaction step S1B is not particularly limited.

For example, the heating time in the reaction step S1B is adjusted to 1 minute or more if the reaction temperature is adjusted within the above range. More specifically, the heating time is preferably 5 minutes or more, more preferably 10 minutes or more, and further preferably 20 minutes or more. If the heating time is less than 1 minute, it is assumed that the reaction hardly proceeds. On the other hand, if the heating time is excessively long, improvement in the introduction amount of sulfo groups tends to be less significant.

Therefore, when the heating method described above is used as the reaction step S1B, the heating time is preferably, but not particularly limited to, not less than 5 minutes and not more than 300 minutes, and more preferably not less than 5 minutes and not more than 120 minutes in view of reaction time and operability.

Sulfonating Agent

In sulfonation, it is possible to introduce sulfo groups using only a sulfonating agent; however, problems including the following problems: (1) a long period of time is required for introduction of sulfo groups; (2) the fiber length tends to decrease due to the influence of the acid of the sulfonating agent; and (3) the fibers obtained after the reaction are colored due to the influence of the acid of the sulfonating agent, occur. These problems can be overcome by supplying both urea and/or derivatives thereof to the chemical treatment step S1 together.

The sulfonating agent to be supplied in the chemical treatment step S1 is not particularly limited insofar as it is a compound having sulfo groups.

Examples thereof include sulfamic acid, sulfamic acid salts, and sulfuryl compounds with sulfonyl group having two oxygen atoms bonded to sulfur via a covalent bond. These compounds may be used alone or in combination of 2 or more kinds as the sulfonating agent.

The sulfonating agent is not particularly limited insofar as it is a compound described above. However, it is preferable to use sulfamic acid in view of the handling property because sulfamic acid has a lower acidity than sulfuric acid or the like, ensures high sulfo group introduction efficiency, and is inexpensive and highly safe.

Urea and Derivatives Thereof

Among urea and its derivatives used in the chemical treatment step S1, the derivative of urea is not particularly limited insofar as it is a compound containing urea.

Examples thereof include carboxylic acid amides, composite compounds of isocyanate and amine, and thiamides. The urea and the derivative thereof may be used individually or in combination of both. As the derivatives of urea, the compounds described above may be used individually or in combination of 2 or more kinds.

The urea and the derivative thereof are not particularly limited insofar as they are compounds described above. However, it is preferable to use urea in view of the handling property as urea is inexpensive, has low influence of environmental burden, and ensures high safety.

Fiber Raw Material

The fiber raw material used in the production of sulfonated fine cellulose fibers is not particularly limited insofar as it contains cellulose.

For example, wood-based pulp (hereinafter simply referred to as wooden pulp), dissolving pulp, cotton-based pulp such as cotton linter, wheat straw, rice straw, bagasse, paper mulberry, paper birch, hemp, kenaf, nonwood-based pulp such as fruit-based pulp, cellulose isolated from ascidian or seaweed, and waste-paper-based pulp produced from waste newspapers, waste magazines, or waste cardboards can be used as the fiber raw material. In view of availability, wooden pulp is preferably used.

There are various kinds of wooden pulp. However, there is no particular limitation of use.

Examples thereof include chemical pulps such as Kraft Pulp (KP) and Sulfite Pulp (SP) derived from various types of wood, mechanical pulps such as thermomechanical pulp (TMP) and ground pulp (GP), and powdered cellulose obtained by grinding these pulps. Bleached Kraft Pulp (NBKP, LBKP or the like) is preferable from the viewpoint of production cost and mass production.

When the pulps described above are used as the fiber raw material, the pulps described above may be used individually or in combination of 2 or more kinds.

Drying Step in Chemical Treatment Step S1

The chemical treatment step S1 in the method for producing sulfonated fine cellulose fibers of the present embodiment may include a drying step between the contact step S1A and the reaction step S1B.

This drying step functions as a pretreatment step before the reaction step S1B, and performs drying so that the moisture content of the fiber raw material after the contact step S1A is in an equilibrium state. The fiber raw material after the contact step S1A may be supplied to the reaction step S1B and heated in a wet state. However, there is a concern that a part of sulfamic acid, urea, or the like is subjected to hydrolysis. Therefore, to allow the sulfonation reaction in the reaction step S1B to appropriately proceed, it is preferable to perform a drying step before the reaction step S1B.

The moisture content in an equilibrium state means a state in which the moisture in the atmosphere in the treatment facility and the moisture in the sample do not visually come in and out.

The drying step is a step of removing the solvent of the reaction solution by drying the fiber raw material in a state of being in contact with the reaction solution at a temperature lower than the heating temperature in the reaction step S1B. The devices and the like used in the drying step are not particularly limited, and a dryer or the like used in the above-described reaction step S1B can be used.

The drying temperature in this drying step is not particularly limited.

For example, the atmosphere temperature in the heating device is preferably 100°C or less, more preferably not less than 20°C and not more than 100°C, further preferably not less than 50°C and not more than 100°C. If the atmosphere temperature during the heating exceeds 100 °C , the sulfonating agent and the like may be decomposed. On the other hand, if the atmosphere temperature during the heating is less than 20°C, the drying time increases.

Therefore, in order to appropriately perform the above-described reaction, the atmosphere temperature during the heating is preferably 100°C or less, and in view of operability, the atmosphere temperature during the heating is preferably 20°C or more.

Washing Step

The method for producing sulfonated fine cellulose fibers of the present embodiment may include a washing step for washing the fiber raw material in which sulfo groups are introduced, after the reaction step S 1B in the chemical treatment step S1.

The surface of the fiber raw material after the introduction of sulfo groups is acidic by the influence of the sulfonating agent. In addition, an unreacted reaction solution is also present. Therefore, it is preferable to reliably terminate the reaction and remove the excess reaction solution to ensure a neutral state, thereby improving the handling property.

The washing step is not particularly limited insofar as the fiber raw material after the introduction of sulfo groups can be substantially neutralized. For example, a method of washing the fiber raw material obtained after the introduction of sulfo groups with pure water or the like until the fiber raw material becomes neutral can be employed.

Further, neutralization washing using an alkali or the like may also be performed. In the neutralization washing, examples of the alkali compound contained in the alkali solution include inorganic alkali compounds, organic alkali compounds, and the like. Examples of inorganic alkali compound include hydroxides, carbonates, phosphates, and the like of alkali metals. Examples of organic alkali compound include ammonia, aliphatic amines, aromatic amines, aliphatic ammonium, aromatic ammonium, heterocyclic compounds, and hydroxides of heterocyclic compounds.

Fibrillation Treatment Step S2

The fibrillation treatment step S2 is a step of fibrillating the sulfonated fiber raw material into fine fibers having a predetermined size (for example, nano-level size). A sulfonated fine cellulose fiber dispersion liquid is obtained in the step S2. In this sulfonated fine cellulose fiber dispersion liquid, the sulfonated fine cellulose fibers fibrillated in the fibrillation treatment step S2 are dispersed in a water-soluble solvent such as water.

The processing device used in the fibrillation treatment step S2 is not particularly limited insofar as it has the above-described function. Examples of processing device include, but not limited to, a low-pressure homogenizer, a high-pressure homogenizer, a grinder (stone mill type pulverizer), a ball mill, a cutter mill, a jet mill, a short-screw extruder, a twinscrew extruder, an ultrasonic stirrer, a household mixer, and the like. Among these, it is preferable to use a high-pressure homogenizer, which is capable of uniformly applying a force to the material and is also capable of excellent homogenization; however, the processing device is not limited to high-pressure homogenizers.

Introduction Amount of Sulfo Group

The introduction amount of the sulfo groups is preferably, but not particularly limited to, 0.5 mmol/g to 3.0 mmol/g, more preferably 0.6 mmol/g to 3.0 mmol/g, still more preferably 0.8 mmol/g to 3.0 mmol/g, and particularly preferably 1.0 mmol/g to 3.0 mmol/g.

If the amount of the sulfo group introduced is less than 0.5 mmol/g, the dispersibility of the sulfonated fine cellulose fibers when a dry solid containing fine cellulose fibers described later is dispersed in water or the like decreases. Thus, the redispersibility of the dry solid containing fine cellulose fibers in solvents such as water or the like also decreases. On the other hand, when the amount of sulfo groups introduced is more than 3.0 mmol/g, there is a concern that the original properties of the fine cellulose fibers may be lost due to a decrease in the crystallinity of the sulfonated fine cellulose fibers, and the cost for introducing sulfo groups also increases.

In particular, in the production of a dry solid containing fine cellulose fibers described later, in relation to the drying temperature in drying the sulfonated fine cellulose fiber dispersion liquid containing sulfonated fine cellulose fibers after the fibrillation treatment step S2, the sulfo groups are preferably introduced in the following manner in view of the dispersibility of the dry solid containing fine cellulose fibers after drying.

For example, when drying is performed at a drying temperature of 40°C or less, the amount of sulfo groups introduced is preferably not less than 0.5 mmol/g and less than 0.9 mmol/g; when drying is performed at a drying temperature of 70 °C or less, the amount of sulfo groups introduced is preferably not less than 0.9 mmol/g and less than 1.4 mmol/g; and when drying is performed at a drying temperature of 120°C or less, the amount of sulfo groups introduced is preferably not less than 1.4 mmol/g and not more than 3.0 mmol/g.

In addition, if the same temperature is used as the drying temperature in drying a mixture containing fine cellulose fibers (a sulfonated fine cellulose fiber dispersion liquid), it is preferable to increase the sulfo group introduction amount in view of improving the dispersibility of the dry solid containing fine cellulose fibers after drying.

Method for Measuring Sulfo Group Introduction Amount

The measurement of the amount of sulfo groups introduced in the sulfonated fine cellulose fibers can be performed by combusting a predetermined amount of sulfonated fine cellulose fibers, and measuring the sulfur content in the combustion product according to IEC 62321 using a combustion-ion chromatography. Further, when the sulfonated fine cellulose fibers are prepared from the sulfonated fiber raw material described above, the amount of sulfo groups introduced may be determined from the amount of sulfur introduced into the sulfonated fiber raw material.

Average Fiber Width of Sulfonated Fine Cellulose Fibers

The average fiber width of the sulfonated fine cellulose fibers is adjusted to, but not particularly limited to, 1 nm to 1000 nm, preferably 2 nm to 500 nm, more preferably 2 nm to 100 nm, further preferably 2 nm to 30 nm, and further more preferably 2 nm to 20 nm when the fibers are observed with an electron microscope.

A fiber width of sulfonated fine cellulose fibers of less than 1 nm indicates that the fine cellulose fibers are dissolved in water as cellulose molecules; therefore, the characteristics (strength, rigidity, or dimensional stability) of the sulfonated fine cellulose fibers are not expressed. On the other hand, if the fiber width is more than 1000 nm, the cellulose fibers are no longer regarded as sulfonated fine cellulose fibers; rather, the fibers are regarded simply as fibers contained in ordinary pulp. Therefore, the fibers become more difficult to ensure the characteristics (transparency, strength, rigidity, or dimensional stability) of sulfonated fine cellulose fibers.

Further, when the average fiber width of the sulfonated fine cellulose fibers is more than 30 nm, the aspect ratio tends to decrease and the entanglement between fibers tends to decrease. Further, when the average fiber width is more than 30 nm, which is close to 1/10 of the wavelength of visible light, the refraction and scattering of visible light easily occur at the interface when the fibers are combined with a matrix material. As a result, due to the scattering of visible light, the transparency tends to decrease.

Therefore, the average fiber width of the sulfonated fine cellulose fibers is preferably, but not particularly limited to, 2 nm to 30 nm, more preferably 2 nm to 20 nm, and further preferably 2 nm to 10 nm in view of use requiring a handling property and transparency. Further, in view of transparency, the average fiber width of the sulfonated fine cellulose fibers is preferably adjusted to 20 nm or less, more preferably 10 nm or less. When the average fiber width is adjusted to 10 nm or less, scattering of visible light can be reduced; therefore, sulfonated fine cellulose fibers having high transparency can be obtained (in other words, the high transparency indicates that the sulfonated fine cellulose fibers have a small average fiber width and is thus regarded as being sufficiently fibrillated).

Method for Measuring Average Fiber Width

The average fiber width of the sulfonated fine cellulose fibers can be measured using the following method.

For example, the sulfonated fine cellulose fibers are dispersed in a solvent such as pure water to prepare a mixed solution having a predetermined mass%. The mixed solution is applied to a silica substrate coated with PEI (polyethyleneimine) by spin coating, and the sulfonated fine cellulose fibers on the silica substrate are observed. As an observation method, for example, a scanning probe microscope (for example, SPM-9700 manufactured by Shimadzu Corporation) can be used. The average fiber width of the sulfonated fine cellulose fibers can be determined by randomly selecting 20 sulfonated fine cellulose fibers in the observation image, measuring the individual fiber widths, and averaging the measured widths.

Haze Value

The transparency of the sulfonated fine cellulose fiber dispersion liquid and the fine cellulose fiber redispersion liquid described later can be evaluated according to the haze value of the dispersion liquid.

Specifically, insofar as the haze value of the dispersion liquid adjusted so that the solid concentration when the sulfonated fine cellulose fibers are dispersed in the dispersion liquid is 0.5% by mass has transparency according to visual inspection, the value is not particularly limited.

For example, the haze value of the dispersion liquid is preferably 20% or less, more preferably 15% or less, and further preferably 10% or less. If the haze value of the dispersion liquid is more than 20%, it becomes more difficult to appropriately exhibit transparency.

Therefore, the sulfonated fine cellulose fibers are preferably prepared such that the haze value of the dispersion liquid adjusted to have a solid concentration of 0.5% by mass falls within the above range.

The solid concentration (% by mass) can be determined according to the following formula.

$$\text{Solid concentration (\% by mass)} = ((\text{solid mass of sample}) / \text{mass of sample}) \times 100$$

(The solid mass of the sample means the mass (g) of the solid substance left after drying the same amount of the sample subjected to the measurement in an atmosphere of 105°C for 2 hours to a constant weight (for example, in the above example, the sulfonated fine cellulose fibers having a constant weight obtained by drying a dispersion liquid in which the sulfonated fine cellulose fibers are dispersed). The mass of the sample means the mass (g) of the sample subjected to the measurement (for example, in the above example, the dispersion liquid in which the sulfonated fine cellulose fibers are dispersed)).

The dispersion liquid according to the present embodiment is a suspension in which the sulfonated fine cellulose fibers or the dry solid containing fine cellulose fibers described later are dispersed in a solvent without forming large aggregates. The solvent of the dispersion liquid is not particularly limited insofar as it is a solvent soluble in water (water-soluble solvent). Examples of the water-soluble solvent include water alone, alcohols, ketones, amines, carboxylic acids, ethers, amides, and mixtures thereof.

Total Light Transmittance

The total light transmittance is adjusted to 90% or more, more preferably 95% or more, within the above range of haze value of the dispersion liquid. If the total light transmittance of the dispersion liquid is less than 90%, it becomes more difficult to appropriately exhibit transparency.

Methods for Measuring Haze Value and Total Light Transmittance

The haze value and the total light transmittance can be measured as follows.

The sulfonated fine cellulose fibers are dispersed in the dispersion liquid described above at a predetermined solid concentration. Then, by measuring the dispersion liquid using a spectrophotometer in accordance with JIS K 7105, the haze value and the total light transmittance, which indicate the transparency of the sulfonated fine cellulose fiber dispersion liquid and the fine cellulose fiber redispersion liquid in which the dry solid containing fine cellulose fibers described later are dispersed in water or the like, can be determined.

As described above, by preparing the sulfonated fine cellulose fibers so that the average fiber width of the sulfonated fine cellulose fibers falls within the above range, excellent transparency can be exhibited. Therefore, when a composite material or the like is prepared by using the sulfonated fine cellulose fibers, it is possible to exhibit excellent transparency.

Viscosity Property

The viscosity property of the sulfonated fine cellulose fiber dispersion liquid can be evaluated by the Brookfield viscosity of the dispersion liquid.

The viscosity is preferably 500 mPa • s or more, more preferably 1000 mPa • s, further preferably 1500 mPa • s, and particularly preferably 2000 mPa·s or more in a sulfonated fine cellulose fiber dispersion liquid having a solid concentration of the sulfonated fine cellulose fibers of 0.5% by mass and a temperature of 25°C when the measurement is performed at 12 rpm for 3 minutes.

A commercially-available thickener made of polyethylene oxide has a Brookfield viscosity of 100 mPa • s or more under the above conditions (temperature = 25°C, the thickener concentration = 0.5%, 12 rpm).

Therefore, if the sulfonated fine cellulose fiber dispersion liquid has such a large Brookfield viscosity as described above, the sulfonated fine cellulose fiber dispersion liquid can be suitably used as a thickener.

Method for Measuring Brookfield viscosity

The Brookfield viscosity can be measured as follows.

The sulfonated fine cellulose fibers are dispersed in the dispersion liquid described above at a predetermined solid concentration. Then, by measuring the dispersion liquid (sulfonated fine cellulose fiber dispersion liquid) using a Brookfield viscometer in accordance with JIS Z 8803, it is possible to determine the viscosities of the sulfonated fine cellulose fiber dispersion liquid and the fine cellulose fiber redispersion liquid described later.

Further, the Brookfield viscosity recovery rate (%) of the dry solid containing fine cellulose fibers can be determined from the following formula based on the viscosity of the sulfonated fine cellulose fiber dispersion liquid and the viscosity of the fine cellulose fiber redispersion liquid. Since the Brookfield viscosity recovery rate (%) has a correlation with the precipitation property of the dry solid containing fine cellulose fibers described later, the value can be evaluated as the dispersibility of the dry solid containing fine cellulose fibers.

$$\text{(Brookfield viscosity recovery rate (\%))} = \text{(viscosity of fine cellulose fiber redispersion liquid)} / \text{(viscosity of sulfonated fine cellulose fiber dispersion liquid)} \times 100$$

In the formula of the Brookfield viscosity recovery rate (%) shown above, the sulfonated fine cellulose fiber dispersion liquid corresponds to the "pre-drying dispersion liquid" of the Brookfield viscosity recovery rate described in the Claims, and the fine cellulose fiber redispersion liquid corresponds to the "post-drying redispersion liquid" of the Brookfield viscosity recovery rate described in the Claims.

2. Method for Producing Dry Solid Containing Fine Cellulose Fibers

The method for producing a dry solid containing fine cellulose fibers according to the present embodiment is performed by drying a sulfonated fine cellulose fiber dispersion liquid, which is a dispersion liquid in which the sulfonated fine cellulose fibers prepared as described above are dispersed in water, without adding a dispersant such as a metal ion or a water-soluble polymer so as to have the above-described predetermined moisture content or less. More specifically, the sulfonated fine cellulose fiber dispersion liquid of the present embodiment is in a state in which the sulfonated fine cellulose fibers are dispersed in a water-soluble solvent such as water, and the dry solid containing fine cellulose fibers of the present embodiment is obtained by drying the sulfonated fine cellulose fiber dispersion liquid described above (this dispersion liquid corresponds to the "mixture" in which the fibrillated fine cellulose fibers obtained after the fibrillation treatment step are dispersed in water described in the Claims). More specifically, the dry solid containing fine cellulose fibers of the present embodiment is a dry matter of the mixture containing fine cellulose fibers having a predetermined average fiber width.

In addition, the dry solid containing fine cellulose fibers obtained by drying the sulfonated fine cellulose fiber dispersion liquid corresponds to the "dry matter" obtained by drying the fine cellulose fibers described in the Claims.

Drying the sulfonated fine cellulose fiber dispersion liquid means a state in which moisture is removed from the sulfonated fine cellulose fiber dispersion liquid as much as possible. This is a concept including, for example, a state in which the moisture of the dry solid containing fine cellulose fibers is substantially removed after drying, as well as a state in which the dry solid containing fine cellulose fibers after drying contains moisture, which is described below.

For example, the moisture content of the dry solid containing fine cellulose fibers after drying may be 80% or less, preferably not more than 80% and not less than 50%, more preferably 50% or less, more preferably 30% or less, further preferably 20% or less, and particularly preferably 10% or less.

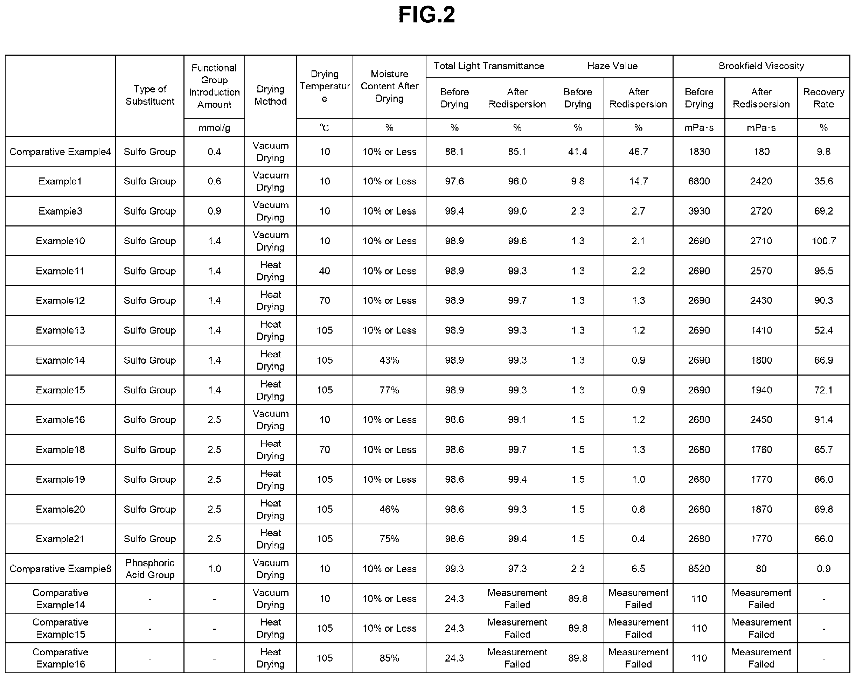

The higher the moisture content, the higher the production efficiency, ensuring that the fibers can be treated under mild conditions or that the heating time can be shortened, so that damage to the fibers can be reduced. Therefore, the quality of the dry solid containing fine cellulose fibers can be improved. Increasing the moisture content also makes it possible to improve the transparency of the fine cellulose fiber redispersion liquid in which the dry solid containing fine cellulose fibers is dispersed in water or the like (see FIG. 2).

On the other hand, in view of transportation and handling properties, the moisture content is preferably low. For example, the moisture content is preferably 50% or less, more preferably 30% or less, even more preferably 20% or less, and still more preferably 10% or less.

The moisture content (%) can be expressed by the amount of water relative to the weight of the dry solid containing fine cellulose fibers in accordance with JIS P 8203. More specifically, the moisture content (%) can be determined according to the following formula, which is the same as above.

$$\text{Moisture content (\%)} = ((\text{mass of sample - solid mass of sample}) \,/\, \text{mass of sample}) \times 100$$

(The mass of the sample means the mass (g) of the sample subjected to the measurement (for example, in the above example, the dry solid containing fine cellulose fibers). The solid mass of the sample means the mass (g) of the solid substance left after drying the same amount of the sample subjected to the measurement in an atmosphere of 105°C for 2 hours to a constant weight (for example, in the above example, the dry solid containing fine cellulose fibers having a constant weight obtained by drying a dry solid containing fine cellulose fibers).

Drying Temperature

In view of reducing aggregation of the sulfonated fine cellulose fibers due to heat and preventing discoloration after heating, the temperature upon drying of the sulfonated fine cellulose fiber dispersion liquid may be 120°C or less. In view of ensuring more excellent redispersibility, the drying temperature is preferably 80°C or less, further preferably 70°C or less, more preferably 40°C or less, and particularly preferably 10°C or less. In particular, if the drying temperature is 40°C or less, it is possible to ensure excellent redispersibility even when the amount of substituents introduced into the sulfonated fine cellulose fibers is low.

In particular, in view of the relationship between the dispersibility and the amount of sulfo groups introduced, as described above, when the amount of sulfo groups introduced is not less than 0.5 mmol/g and less than 0.9 mmol/g, drying is preferably carried out at a drying temperature of 40°C or less; when the amount of sulfo groups introduced is not less than 0.9 mmol/g and less than 1.4 mmol/g, drying is preferably carried out at a drying temperature of 70°C or less; and when the amount of sulfo groups introduced is not less than 1.4 mmol/g and not more than 3.0 mmol/g, drying is preferably carried out at a drying temperature of 120°C or less.

When the amount of sulfo groups introduced is the same, the dispersibility tends to improve by lowering the drying temperature.

Drying Method

The method for drying the sulfonated fine cellulose fiber dispersion liquid is not particularly limited, and a dry solid containing fine cellulose fibers can be obtained by a known method such as natural drying, heat drying, depressurized drying, vacuum drying, or spray drying.

In particular, in view of the fact that, as described above, the redispersibility of the dry solid containing fine cellulose fibers is better when the drying temperature is lower, it is preferable to use a method of drying under a depressurized atmosphere or a vacuum atmosphere in which the drying time can be shortened even in drying under a relatively low temperature condition.

Examples of the depressurized or vacuum atmosphere include depressurized or vacuum conditions of 480 hPa or less, which is near the saturated water vapor pressure of 80°C water, more preferably 320 hPa or less, which is near the saturated water vapor pressure of 70°C water, still more preferably 75 hPa or less, which is near the saturated water vapor pressure of 40°C water, and particularly preferably 15 hPa or less, which is near the saturated water vapor pressure of 10°C water.

In the present specification, the drying method performed under reduced pressure using an apparatus, such as a vacuum apparatus, capable of reducing the pressure in the atmosphere upon drying, is referred to as depressurized drying, and the depressurized drying is a concept that also includes vacuum drying in which the atmospheric pressure is further lowered. Further, in the present specification, drying under an atmospheric pressure of 100 Pa or less, which can be achieved by using a vacuum apparatus, is referred to as vacuum drying.

As described above, it is not necessary to add a special dispersant to the dry solid containing fine cellulose fibers of the present embodiment during the drying in order to ensure dispersibility upon redispersion; however, the dry solid containing fine cellulose fibers may contain, for example, glycerin or a derivative thereof, an alcohol such as ethylene glycol or isopropanol, and the like as a dispersant, in addition to metal or the like such as aluminum ion or calcium ion described above. In this case, the redispersibility can be further improved.

Redispersion Method

The fine cellulose fiber redispersion liquid is obtained by adding a solvent such as water to the dry solid containing fine cellulose fibers to thereby obtain a liquid containing a dry solid containing fine cellulose fibers, and then stirring the mixture liquid. More specifically, the fine cellulose fiber redispersion liquid is in a state in which the dry solid containing fine cellulose fibers are dispersed in a water-soluble solvent such as water.

As the stirring method for the stirring, it is possible to cause redispersion using a manual shaker or an apparatus having a stirring function at a relatively low energy. Examples of apparatus used for the stirring include, but not particularly limited to, an automatic shaker, a magnetic stirrer, an ultrasonic vibrator, a household mixer, and other stirrers having various stirring elements.

As the apparatus having a stirring function, an apparatus having a relatively high energy such as those used in the production of fine cellulose fibers may be used. Examples thereof include, but not particularly limited to, apparatuses such as a grinder with a stone mill having a pulverizing function, a jet mill, a homogenizer having a homogenizing function, a high-pressure homogenizer, a static mixer (a static stirrer), and a media mill having a dispersing function.

3. Fine Cellulose Fiber Redispersion Liquid

The fine cellulose fiber redispersion liquid according to the present embodiment is a dispersion liquid obtained by dispersing the dry solid containing fine cellulose fibers in a solvent soluble in water (water-soluble solvent), such as water, by stirring or the like as described above.

The solid concentration of the dry solid containing fine cellulose fibers after the redispersion in the water-soluble solvent is not particularly limited, and can be appropriately adjusted according to the use of the fine cellulose fiber redispersion liquid after the redispersion.

The solvent used for the redispersion is preferably water, particularly preferably pure water, so that the application of the fine cellulose fiber redispersion liquid is not limited.

In addition to water, other suitable solvents can be selected depending on the intended use. For example, polar organic solvents having a similar solubility parameter may be used. Examples of polar organic solvent include, but not particularly limited to, alcohols, ketones, ethers, and dimethyl sulfoxide (DMSO).

Evaluation of Redispersibility

The redispersibility of the dry solid containing fine cellulose fibers can be evaluated by measuring and comparing at least one item of the haze value, the total light transmittance, the Brookfield viscosity, and the precipitation property of the fine cellulose fiber redispersion liquid obtained by redispersing the dry solid containing fine cellulose fibers in water and the dry solid containing fine cellulose.

Good redispersibility is defined by any one or a plurality of the following findings:

1) a small difference in total light transmittance after redispersion and before drying;
2) a small difference in haze value after redispersion and before drying;
3) a small difference in viscosity (i.e., a high recovery rate of viscosity) after redispersion and before drying; and
4) No aggregation or the like after redispersion in the precipitation property test.

The precipitation property can be confirmed by redispersing the dry solid containing fine cellulose fibers in water and observing coarse fibers and a precipitation state due to aggregation of sulfonated fine cellulose fibers in the fine cellulose fiber redispersion liquid after a predetermined time (for example, the entire day and night) passed after the redispersion of the dry solid containing fine cellulose fibers in water.

Examples

The present invention is more specifically explained below in reference to Examples. The present invention is, however, not limited to these examples.

Example 1

Production of Sulfonated Fine Cellulose Fiber Dispersion Liquid

Needle Bleached Kraft Pulp (NBKP produced by Marusumi Paper Co., Ltd.) was used. Hereinbelow, NBKP used in the experiment is simply referred to as a pulp. The pulp was washed with a large amount of pure water, the water was removed using a 200-mesh sieve, then the solid concentration was measured, and the pulp was subjected to the experiment.

Chemical Treatment Step

The pulp was added to a reaction solution prepared as follows and the mixture was stirred to form a slurry. The step of adding pulp to the reaction solution to form a slurry corresponds to the contact step in the chemical treatment step of the present embodiment.

Reaction Solution Preparation Step

The sulfonating agent and urea and/or a derivative thereof were prepared to have the following solid concentrations.

In the experiment, sulfamic acid (having a purity of 98.5%, manufactured by Fuso Chemical Co., Ltd.) was used as the sulfonating agent. As urea or a derivative thereof, a urea solution (having a purity of 99%, manufactured by Wako Pure Chemical Industries, Ltd., Model No.: special grade reagent) was used. They were mixed at a mixing ratio (a concentration ratio (g/L)) of 1:2.5, thereby preparing an aqueous solution.

More specifically, the sulfamic acid and the urea were mixed as follows.

$$\text{Ratio of sulfamic acid/urea } ((\text{g/L})/(\text{g/L})) = 200/500$$

An example of the preparation of the reaction solution is shown below.

100 ml of water was added to a container. Then, 20 g of sulfamic acid and 50 g of urea were added to the container to prepare a reaction solution having a ratio of sulfamic acid/urea ((g/L)/(g/L)) of 200/500 (1:2.5). More specifically, urea was added in an amount of 250 parts by weight with respect to 100 parts by weight of sulfamic acid.

In the experiment, 2 g (absolute dry weight) of pulp was added to the prepared reaction solution. More specifically, in the case of a reaction solution having a sulfamic acid/urea ratio ((g/L)/(g/L)) of 200/500 (1:2.5), the sulfamic acid was adjusted to 1000 parts by weight and the urea was adjusted to 2500 parts by weight with respect to 100 parts by weight of the pulp.

A slurry prepared by adding pulp to the reaction solution was stirred for 10 minutes using a stirrer. After the stirring, the slurry was subjected to suction filtration using a filter paper (No. 2). The suction filtration was carried out until the solution stopped dripping. After the suction filtration, the pulp was peeled off from the filter paper, and the filtered pulp was placed in a dryer (Model No.: VTR 115, manufactured by Isuzu Seisakusho) with a constant-temperature bath set to 50°C, and dried until the moisture content (%) determined by the following formula fell to an equilibrium state.

The sample was weighed by a measurement method using a weighing bottle. An electronic balance (Model No.: RJ-320, manufactured by Shinko Denshi Co., Ltd.) was used for weighing.

$$\text{Moisture content (\%)} = ((\text{mass of sample - solid mass of sample}) / \text{mass of sample}) \times 100$$

Sample: pulp removed from filter paper

Mass of sample: mass (g) of pulp fed to a dryer after removed from filter paper Solid mass of sample: mass (g) of the solid substance left after the drying of pulp removed from a filter paper in the same amount as the mass (g) of the pulp fed to the dryer after removed from the filter paper in an atmosphere of 105°C for 2 hours to a constant weight; the drying was performed by a method according to JIS P 8225.

The equilibrium state of the moisture content (%) means a state in which the moisture in the atmosphere in the treatment facility and the moisture in the sample do not visually come in and out was observed. For example, after a sample was dried in a weighing bottle having a known weight for a predetermined time, the weighing bottle was capped inside the drying device, the sample was taken out from the dryer while still being placed in the weighing bottle, and then was placed in a desiccator or the like containing a desiccant to release heat. Thereafter, the weight of the sample (weight of the weighing bottle containing the sample - weight of the weighing bottle) was measured. The drying was stopped when the amount of weight change between the two measurements was within 1% of the weight at the start of the drying (provided that the second weight measurement was at least a half of the drying time required for the first measurement).

After the moisture content became an equilibrium state, a heating reaction was performed. In the heating reaction, a dryer (Model No.: VTR 115, manufactured by Isuzu Seisakusho) was used. The conditions in the heating reaction were as follows.

Temperature of constant-temperature bath: 120°C, Heating time: 20 minutes

After the heating reaction, the reacted pulp was diluted with pure water to a solid content of 1% by mass or less, neutralized by adding an excess amount of sodium hydrogencarbonate, and then sufficiently washed with pure water to prepare a sulfamic acid/urea-treated pulp suspension.

Fibrillation Treatment Step

The sulfamic acid/urea-treated pulp was fibrillated using a high-pressure homogenizer (N2000-2C-045, manufactured by Kos21 Co., Ltd.) to prepare a sulfonated fine cellulose fiber dispersion liquid. The treatment conditions of the high-pressure homogenizer were as follows.

The solid concentration of the sulfamic acid/urea-treated pulp to be supplied to the high-pressure homogenizer was adjusted to 0.5% by mass. The number of passes was set so that the treatment was done until coarse fibers became invisible. The pressure applied was 60 MPa.

Drying Step

The obtained 50 g of the sulfonated fine cellulose fiber dispersion liquid having a solid concentration of 0.5% by mass (corresponding to 0.25 g in terms of absolute dry weight) was separated to a petri dish and dried (corresponding to vacuum drying in the present embodiment) in a vacuum device (the ultimate vacuum of vacuum pump was 10 Pa) until the moisture content became equilibrium (moisture content of 10% or less) to obtain a dry solid containing fine cellulose fibers. The conditions for the drying were as follows.

Value of vacuum meter indicator of vacuum device: -0.1 MPa or less
Atmosphere temperature in vacuum device: 40°C
Temperature of sample: 10°C

Redispersion Step

The total amount of the obtained dry solid containing fine cellulose fibers was placed in a vial, pure water was added thereto so that the solid concentration was 0.5% by mass. The mixture was allowed to stand for 30 minutes, and then vigorously shaken by hand for 10 minutes, thereby obtaining a fine cellulose fiber redispersion liquid in which the dry solid containing fine cellulose fibers is redispersed.

The evaluation described below was performed after the dispersion liquid was allowed to stand for another all day and night.

Evaluation

Elemental analysis (sulfur) of pulp after chemical treatment

The sulfur content in the pulp obtained after the chemical treatment was determined by combustion-ion chromatography. The measurement was performed in accordance with the measurement conditions of IEC 62321.

Combustion device: Model No. AQF-2100 H, manufactured by Mitsubishi Chemical Analytech
Ion chromatography: Model No. ICS-1600, manufactured by Thermo Fisher Scientific

Measurement of Haze Value and Measurement of Total Light Transmittance of Sulfonated Fine Cellulose Fiber Dispersion Liquid and Fine Cellulose Fiber Redispersion Liquid

To measure a haze value and a total light transmittance, a sulfonated fine cellulose fiber dispersion liquid was prepared by dispersing sulfonated fine cellulose fibers in pure water so that the solid concentration was 0.5% by mass. Then, the prepared solution was separated and measured using a spectrophotometer (Model No.: V-570 manufactured by JASCO Corporation). The measurement was performed in accordance with the method of JIS K 7105.

Viscosity Measurement of Sulfonated Fine Cellulose Fiber Dispersion Liquid and Fine Cellulose Fiber Redispersion Liquid

The viscosity of the sulfonated fine cellulose fiber dispersion liquid and the fine cellulose fiber redispersion liquid prepared by the method described below were measured with a Brookfield viscometer (LVDV-I Prime, manufactured by Eko Instruments Co., Ltd.).
Specifically, each measurement sample had a solid concentration of 0.5% by mass and a temperature of 25 °C, and the measurement was performed at a rotation speed of 12 rpm for 3 minutes with an accompanying LV spindle.
The Brookfield viscosity recovery rate was calculated according to the following formula.

$$\text{(Brookfield viscosity recovery rate (\%))} = \text{(viscosity of fine cellulose fiber redispersion liquid)} / \text{(viscosity of sulfonated fine cellulose fiber dispersion liquid)} \times 100$$

Precipitation Property of Fine Cellulose Fiber Redispersion Liquid

The dry solid containing fine cellulose fibers (0.25 g in absolute dry weight) was placed in a vial, pure water was added thereto. The solid concentration of the dry solid containing fine cellulose fibers was adjusted to 0.5% by mass. The mixture was shaken by hand, and was left unattended overnight, thereby obtaining a fine cellulose fiber redispersion liquid. The state of precipitation of the obtained dispersion liquid was visually confirmed and evaluated as follows.

◎: Transparent and there was few aggregation
○: Some aggregation of fibers and slight white turbidity were observed, but no sedimentation.
×: Aggregation of fibers and sedimentation were observed.

Example 2

Example 2 was performed in the same manner as in Example 1 except that the heat drying in the drying step was performed in a dryer with a constant-temperature bath having a temperature of 40°C.

Example 3

Example 3 was performed in the same manner as in Example 1, except that the reaction solution preparation step was performed such that a reaction solution having a sulfamic acid/urea ratio ((g/L)/(g/L)) of 200/200 was used, and the sulfamic acid was adjusted to 1000 parts by weight and the urea was adjusted to 1000 parts by weight with respect to 100 parts by weight of the pulp.

Example 4

Example 4 was performed in the same manner as in Example 3 except that the heat drying in the drying step was performed in a dryer with a constant-temperature bath having a temperature of 40°C.

Example 5

Example 5 was performed in the same manner as in Example 3 except that the heat drying in the drying step was performed in a dryer with a constant-temperature bath having a temperature of 70°C.

Example 6

The reaction solution preparation step was performed such that a reaction solution having a sulfamic acid/urea ratio ((g/L)/(g/L)) of 200/300 was used, and the sulfamic acid was adjusted to 1000 parts by weight and the urea was adjusted to 1500 parts by mass with respect to 100 parts by weight of the pulp. Further, the reaction temperature was 160°C and the reaction time was 1 hour in the heating step. The rest was the same as Example 1.

Example 7

Example 7 was performed in the same manner as in Example 6 except that the heat drying in the drying step was performed in a dryer with a constant-temperature bath having a temperature of 40°C.

Example 8

Example 8 was performed in the same manner as in Example 6 except that the heat drying in the drying step was performed in a dryer with a constant-temperature bath having a temperature of 70°C.

Example 9

Example 9 was performed in the same manner as in Example 6 except that the heat drying in the drying step was performed in a dryer with a constant-temperature bath having a temperature of 105°C.

Example 10

Needle Bleached Kraft Pulp (NBKP produced by Marusumi Paper Co., Ltd.) was used as in Example 1. The pulp was washed with a large amount of pure water, the water was removed using a 200-mesh sieve, then the solid concentration was adjusted to 20% by weight, and the pulp was subjected to the experiment.

The reaction solution was prepared so that sulfamic acid was 200 g and urea was 200 g with respect to 1 L of pure water. More specifically, the mixing was performed to ensure the following ratio.

$$\text{Ratio of sulfamic acid/urea } ((g/L)/(g/L)) = 200/200$$

10 g (absolute dry weight) of pulp was weighed, and was impregnated with the reaction solution in an amount of 1000 parts by mass per 100 parts by mass of the pulp. More specifically, the pulp and the reaction solution were mixed so that the solid content weight of the reaction solution was 100 g per 10 g (absolute dry weight) of the pulp, and were kneaded so that the pulp was uniformly impregnated with the chemical liquid. The pulp slurry impregnated with the reaction solution was dried in a dryer with a constant-temperature bath having a temperature of 50°C until no weight change was observed (until the moisture content was in an equilibrium state). The dried pulp was subjected to a heating reaction (sulfonation reaction) under the following reaction conditions.

Temperature of constant-temperature bath: 140°C, Heating time: 30 minutes

After the heating reaction, the pulp was washed using a 300-mesh sieve. More specifically, the pulp after the sulfonation was washed with a large amount of pure water and then neutralized in a saturated sodium hydrogencarbonate solution. Then, the neutralized pulp was washed again with a large amount of water.

The washed sulfonated pulp was adjusted to have a solid concentration of 0.5% by mass, and subjected to a fibrillation treatment.

The fibrillation treatment was performed using a high-pressure homogenizer. The pressure of the high-pressure homogenizer was 60 MPa. The number of passes was set so that the treatment was done until coarse fibers became invisible, thereby obtaining sulfonated fine cellulose fibers.

The redispersibility test and evaluation of the dry solid containing fine cellulose fibers prepared by drying the obtained sulfonated fine cellulose fibers were performed in the same manner as in Example 1.

More specifically, Example 10 was performed in the same manner as in Example 3 except that the reaction solution was used in an amount of 1000 parts by mass in terms of solid content weight per 100 parts by mass in terms of absolute dry weight of pulp, that the pulp was impregnated with the reaction solution and then subjected to a heating reaction without dehydration by suction filtration, that the temperature during the heating reaction was 140°C, and that the time of the heating reaction was 30 minutes.

Example 11

Example 11 was performed in the same manner as in Example 10 except that the heat drying in the drying step was performed in a dryer with a constant-temperature bath having a temperature of 40°C.

Example 12

Example 12 was performed in the same manner as in Example 10 except that the heat drying in the drying step was performed in a dryer with a constant-temperature bath having a temperature of 70°C.

Example 13

Example 13 was performed in the same manner as in Example 10 except that the heat drying in the drying step was performed in a dryer with a constant-temperature bath having a temperature of 105°C.

Example 14

Example 14 was performed in the same manner as in Example 13 except that the heat drying in the drying step was performed in a dryer with a constant-temperature bath having a temperature of 105°C, and that the moisture content of the dry solid containing fine cellulose fibers after drying was adjusted to 43%.

Example 15

Example 15 was performed in the same manner as in Example 13 except that the heat drying in the drying step was performed in a dryer with a constant-temperature bath having a temperature of 105°C, and that the moisture content of the dry solid containing fine cellulose fibers after drying was adjusted to 77%.

Example 16

Needle Bleached Kraft Pulp (NBKP produced by Marusumi Paper Co., Ltd.) was used as in Example 1. The pulp was washed with a large amount of pure water, the water was removed using a 200-mesh sieve, then the solid concentration was adjusted to 20% by weight, and the pulp was subjected to the experiment.
The reaction solution was prepared so that sulfamic acid was 200 g and urea was 500 g with respect to 1 L of pure water. More specifically, the mixing was performed to ensure the following ratio.

$$\text{Ratio of sulfamic acid/urea } ((\text{g/L})/(\text{g/L})) = 200/500$$

10 g (absolute dry weight) of pulp was weighed, and was impregnated with the reaction solution in an amount of 150 parts by mass per 100 parts by mass of the pulp. More specifically, the pulp and the reaction solution were mixed so that the solid content weight of the reaction solution was 15 g per 10 g (absolute dry weight) of the pulp, and were kneaded so that the pulp was uniformly impregnated with the chemical liquid.
The pulp slurry impregnated with the reaction solution was dried in a dryer with a constant-temperature bath having a temperature of 50°C until no weight change was observed (until the moisture content was in an equilibrium state). The dried pulp was subjected to a heating reaction (sulfonation reaction) under the following reaction conditions. Temperature of constant-temperature bath: 120°C, Heating time: 25 minutes
After the heating reaction, the pulp was washed using a 300-mesh sieve. More specifically, the pulp after the sulfonation was washed with a large amount of pure water and then neutralized in a saturated sodium hydrogencarbonate solution. Then, the neutralized pulp was washed again with a large amount of water. Other processes were performed as in Example 1, thereby obtaining sulfamic acid/urea-treated pulp (also referred to as sulfonated pulp).
The sulfamic acid/urea-treated pulp thus obtained was subjected to the above treatment once again without being dried, thereby obtaining sulfonated pulp that was treated twice.
The resulting sulfonated pulp treated twice was again reacted with sulfamic acid/urea.
The reaction solution was prepared so that sulfamic acid was 200 g and urea was 200 g with respect to 1 L of pure water. More specifically, the mixing was performed to ensure the following ratio.

$$\text{Ratio of sulfamic acid/urea } ((\text{g/L})/(\text{g/L})) = 200/200$$

10 g (absolute dry weight) of pulp was weighed, and was impregnated with the reaction solution in an amount of 150 parts by mass per 100 parts by mass of the pulp. More specifically, the pulp and the reaction solution were mixed so that the solid content weight of the reaction solution was 15 g per 10 g (absolute dry weight) of the pulp, and were kneaded so that the pulp was uniformly impregnated with the chemical liquid. The pulp slurry impregnated with the reaction solution was dried in a dryer with a constant-temperature bath having a temperature of 50°C until no weight change was observed (i.e., until the moisture content was in an equilibrium state). The dried pulp was subjected to a heating reaction (sulfonation reaction) under the following reaction conditions.

Temperature of constant-temperature bath: 120°C, Heating time: 25 minutes

After the heating reaction, the pulp was washed using a 300-mesh sieve. More specifically, the pulp after the sulfonation was washed with a large amount of pure water and then neutralized in a saturated sodium hydrogencarbonate solution. Then, the neutralized pulp was washed again with a large amount of water. Other processes were performed as in Example 1, thereby obtaining sulfonated pulp.
The washed sulfonated pulp, which was treated three times, was adjusted to have a solid concentration of 0.5% by mass, and subjected to a fibrillation treatment.
The fibrillation treatment was performed using a high-pressure homogenizer. The pressure of the high-pressure homogenizer was 60 MPa. The number of passes was set so that the treatment was done until coarse fibers became invisible, thereby obtaining sulfonated fine cellulose fibers.
The redispersibility test and evaluation of the dry solid containing fine cellulose fibers prepared by drying the obtained sulfonated fine cellulose fibers were performed in the same manner as in Example 1.
More specifically, Example 16 was performed to prepare sulfonated pulp in the same manner as in Example 1 except that, in the first and second treatments, the reaction solution was used in an amount of 150 parts by mass in terms of solid content weight per 100 parts by mass in terms of absolute dry weight of pulp, and that the pulp was impregnated with the reaction solution and then subjected to a heating reaction without dehydration by suction filtration.
The third treatment was performed to obtain sulfonated pulp in the same manner as in Example 1 except that the reaction solution was used in an amount of 150 parts by mass in terms of solid content weight per 100 parts by mass in terms of absolute dry weight of pulp, that the pulp was impregnated with the reaction solution and then subjected to a heating reaction without dehydration by suction filtration, and that the time of the heating reaction was 25 minutes.

Example 17

Example 17 was performed in the same manner as in Example 16 except that the heat drying in the drying step was performed in a dryer with a constant-temperature bath having a temperature of 40°C.
In this experiment, the dry solid containing fine cellulose fibers obtained after the fibrillation treatment followed by the drying step was prepared to have a moisture content of 10% or less.

Example 18

Example 18 was performed in the same manner as in Example 16 except that the heat drying in the drying step was performed in a dryer with a constant-temperature bath having a temperature of 70°C.
In this experiment, the dry solid containing fine cellulose fibers obtained after the fibrillation treatment followed by the drying step was prepared to have a moisture content of 10% or less.

Example 19

Example 19 was performed in the same manner as in Example 16 except that the heat drying in the drying step was performed in a dryer with a constant-temperature bath having a temperature of 105°C.

Example 20

Example 20 was performed in the same manner as in Example 17 except that the heat drying in the drying step was performed in a dryer with a constant-temperature bath having a temperature of 105°C, and that the moisture content after the drying was 46%.

Example 21

Example 21 was performed in the same manner as in Example 17 except that the heat drying in the drying step was performed in a dryer with a constant-temperature bath having a temperature of 105°C, and that the moisture content after the drying was 75%.

Comparative Example 1

Comparative Example 1 was performed in the same manner as in Example 1 except that the heat drying in the drying step was performed in a dryer with a constant-temperature bath having a temperature of 70°C.

Comparative Example 2

Comparative Example 2 was performed in the same manner as in Example 1 except that the heat drying in the drying step was performed in a dryer with a constant-temperature bath having a temperature of 105°C.

Comparative Example 3

Comparative Example 3 was performed in the same manner as in Example 3 except that the heat drying in the drying step was performed in a dryer with a constant-temperature bath having a temperature of 105°C.

Comparative Example 4

Comparative Example 4 was performed in the same manner as in Example 1, except that, in the reaction solution preparation step, the reaction solution was prepared to contain 250 parts by weight of sulfamic acid and 125 parts by weight of urea with respect to 100 parts by weight of pulp.

Comparative Example 5

Comparative Example 5 was performed in the same manner as in Comparative Example 4 except that the heat drying in the drying step was performed in a dryer with a constant-temperature bath having a temperature of 40°C.

Comparative Example 6

Comparative Example 6 was performed in the same manner as in Comparative Example 4 except that the heat drying in the drying step was performed in a dryer with a constant-temperature bath having a temperature of 70°C.

Comparative Example 7

Comparative Example 7 was performed in the same manner as in Comparative Example 4 except that the heat drying in the drying step was performed in a dryer with a constant-temperature bath having a temperature of 105°C.

Comparative Example 8

Preparation of Material Containing Phosphorylated Fine Cellulose Fibers

The same NBKP as that used in Example 1 was pressed so that 56 parts by mass of ammonium dihydrogenphosphate and 150 parts by mass of urea were contained with respect to 100 parts by mass of NBKP in terms of absolute dry mass, thereby obtaining a pulp impregnated with a chemical liquid. The same method as in Example 1 was performed, except that pulp impregnated with a chemical liquid was dried in an atmosphere of 105°C, and then subjected to a reaction step by being heated at an atmosphere temperature of 140°C for 20 minutes to introduce phosphoric acid groups.

Measurement of Amount of Phosphoric Acid Group Introduced

The amount of phosphoric acid groups in the obtained phosphorylated fine cellulose fibers was measured by alkali titration. More specifically, the measurement was performed as follows. As a pretreatment, the phosphorylated fine cellulose fiber slurry was diluted with pure water so as to have a solid concentration of 0.2% by mass, then 10% by volume of a strongly acidic ion exchange resin with respect to the slurry was added thereto, and the mixture was shaken for 1 hour. Then, only the slurry was separated using a metal gauze having a mesh opening of 90 μm.
The slurry separated by the pretreatment described above was subjected to alkali titration. The alkali solution used herein was an aqueous sodium hydroxide solution having a concentration of 0.1 N. More specifically, the electrical conductivity was measured for each alkali dropwise addition, the titer at inflection point was read from the plot of the alkali titer and the electrical conductivity, and the amount of phosphoric acid groups was calculated by dividing the value by the solid content weight of the phosphorylated fine cellulose fibers subjected to the measurement. (A phosphoric acid group has a strongly acidic group and a weakly acidic group, and has two inflection points derived from these groups. In the present experiment, the amount of the strongly acidic group is regarded as the amount of the phosphoric acid group.)

Comparative Example 9

Comparative Example 9 was performed in the same manner as in Comparative Example 8 except that the heat drying in the drying step was performed in a dryer with a constant-temperature bath having a temperature of 40°C.

Comparative Example 10

Comparative Example 10 was performed in the same manner as in Comparative Example 8 except that the heat drying in the drying step was performed in a dryer with a constant-temperature bath having a temperature of 70°C.

Comparative Example 11

Comparative Example 11 was performed in the same manner as in Comparative Example 8 except that the heat drying in the drying step was performed in a dryer with a constant-temperature bath having a temperature of 105°C.

Comparative Example 12

Production of Carboxylated CNF

Carboxy groups were introduced into the same NBKP as that used in Example 1 in the presence of hypochlorite using 2,2,6,6- tetramethyl-1-piperidine-oxyradical (hereinafter referred to as TEMPO) and bromide as catalysts.
More specifically, an aqueous solution was prepared by dissolving 78 mg of TEMPO (Sigma Aldrich) and 754 mg of sodium bromide in water, 5 g (absolute dry weight) of NBKP was added thereto, and the mixture was stirred to a uniform state, thereby obtaining a pulp slurry containing catalyst components. 16.25 mL of 2M aqueous sodium hypochlorite solution was added to the pulp slurry thus obtained, and 0.5N aqueous hydrochloric acid solution was added thereto. The mixture was adjusted to pH 10.3, and an oxidation reaction was started. During the oxidation reaction, pH decreased with time; however, since the decrease of pH was not confirmed after 3 hours, the reaction was regarded to be completed at this point, and the product was sufficiently washed with water to obtain a carboxylated pulp. The steps other than the step of obtaining carboxylated pulp were performed as in Example 9.

Measurement of Amount of Carboxyl Group

The carboxy groups in the carboxylated fine cellulose fibers thus obtained were measured by subjecting the carboxylated pulp before the fibrillation treatment to alkali titration. More specifically, the measurement was performed as follows. 0.3 g (absolute dry weight) of carboxylated pulp was accurately weighed and diluted with pure water so as to have a solid concentration of 0.5%. 0. 1M aqueous hydrochloric acid solution was added to the carboxylated pulp slurry thus obtained. The mixture was adjusted to have a pH of 2.5, and then subjected to alkali titration. The alkali solution used herein was 0.05N aqueous sodium hydroxide solution, and the electrical conductivity was measured every time the alkali solution was added dropwise until the solution had a pH of 11, thereby obtaining a plot of alkali titer and electrical conductivity. The titer at the inflection point was read from the obtained plot, and the value was divided by the solid content weight of the carboxylated pulp subjected to the measurement to calculate the amount of carboxy groups.

Comparative Example 13

Preparation of Material Containing Phosphite-Esterified Fine Cellulose Fibers

The reaction was carried out using the same NBKP as that used in Example 1 in the same manner as in Example 9, except that 130 parts by mass of sodium hydrogenphosphite pentahydrate and 108 parts by mass of urea were used as reaction chemicals with respect to 100 parts by mass of the pulp, and the reaction step was performed by heating the pulp at an atmosphere temperature of 180°C.

Measurement of Amount of Phosphorous Acid Group Introduced

The amount of phosphorous acid groups in the phosphite-esterified fine cellulose fiber dispersion liquid thus obtained was measured in the same manner as in Comparative Example 10.

In Examples and Comparative Examples described above, the fine cellulose fiber dispersion liquid was dried without using an additive such as a dispersant.

Comparative Example 14

A dispersion liquid in which fine cellulose fibers (BiNFi-s, FMa - 10002, manufactured by Sugino Machine Limited) not chemically modified were dispersed in water was subjected to a drying step, thereby preparing a dry solid. The redispersibility test and evaluation of the dry solid thus prepared were performed in the same manner as in Example 1.

More specifically, the fine cellulose fibers described above manufactured by Sugino Machine Limited (the solid concentration at the time of product shipment was 2% by mass) were mixed with pure water so as to have a solid concentration of 0.5% by weight. The mixture was shaken until it had a uniform state and left unattended overnight. The dispersion liquid after being left unattended overnight was subjected to a drying step to prepare a dry solid.

Comparative Example 15

Comparative Example 15 was performed in the same manner as in Comparative Example 14 except that the heat drying in the drying step was performed in a dryer with a constant-temperature bath having a temperature of 105°C.

Comparative Example 16

Comparative Example 16 was performed in the same manner as in Comparative Example 15 except that the heat drying in the drying step was performed in a dryer with a constant-temperature bath having a temperature of 105°C, and that the moisture content after the drying was 85%.

Results

FIG. 2 shows the measurement results (transparency, viscosity property, and the like of the fine cellulose fiber dispersion liquid and the fine cellulose fiber redispersion liquid after redispersion) of Comparative Example 4, Example 1, Example 3, Examples 10 to 16, Examples 18 to 21, Comparative Example 8, and Comparative Examples 14 to 16.

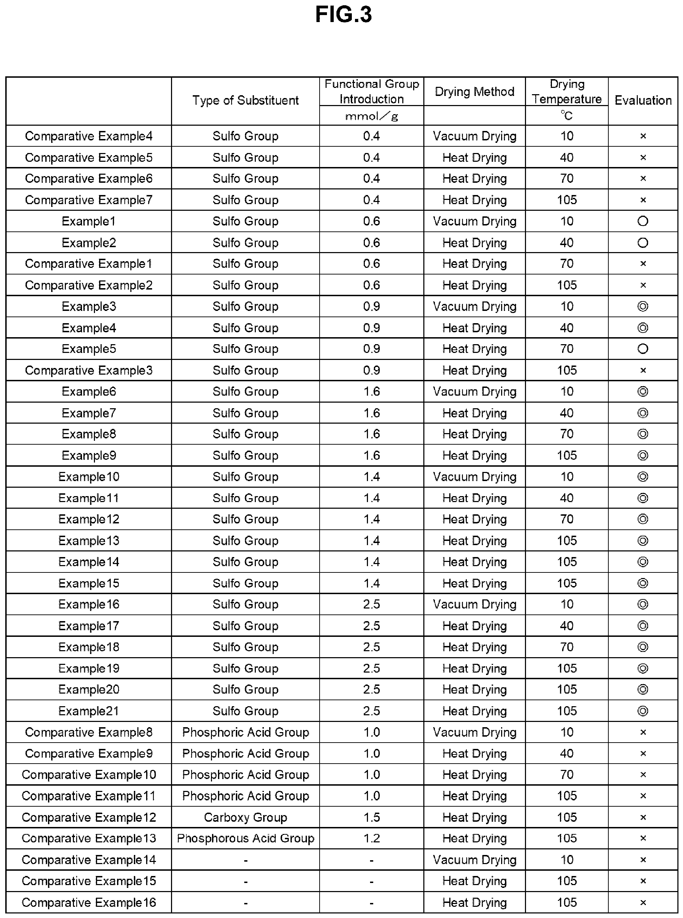

FIG. 3 shows the results of evaluation tests of Examples and Comparative Examples.

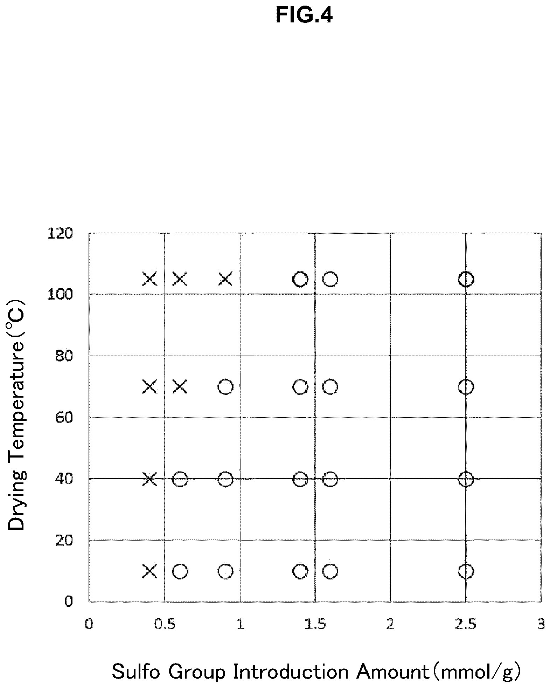

FIG. 4 shows the results of the evaluation test by presenting a relationship between the sulfo group introduction amount (sulfur introduction amount) and the drying temperature. In FIG. 4, "○" represents an Example, and "×" represents a Comparative Example.

As shown in FIGS. 2 and 3, in the present invention, although an additive such as a dispersant was not used, sedimentation of aggregated fibers after the redispersion was not observed; further, viscosity property and transparency (total light transmittance and haze value) were not significantly lowered even after the redispersion. As is thus clear, excellent redispersibility was confirmed.

As shown in FIG. 2, in all of the fine cellulose fibers of Comparative Examples 14 to 16 that were not chemically modified, the evaluation test of the redispersion liquid in which the dry solid was dispersed was evaluated as "×", which means that "aggregated fibers were observed and also sedimentation was confirmed". In addition, even when the moisture content of the dry solid was adjusted to 85%, the same evaluation result was confirmed. Therefore, the transparency (total light transmittance and haze value) and the viscosity could not be appropriately measured in all of these redispersion liquids in which the dry solids were dispersed.

Industrial Applicability

The dry solid containing fine cellulose fibers and the fine cellulose fiber redispersion liquid according to the present invention can be suitably used for many usages in various fields, such as industrial fields, food fields, medical fields, and cosmetic fields, and can also be suitably used as a raw material of a composite material used in these fields. In particular, the fine cellulose fiber redispersion liquid of the present invention ensures excellent transparency even after redispersion, and can be suitably used as a transparent substrate for a transparent film, an optical display, and the like. In addition, with its high viscosity, it can be suitably used as a thickener for cosmetics, foods, pharmaceuticals, paints, inks, cements, and other daily commodities and industrial products.

**Claims**

1. A method for producing a dry solid containing fine cellulose fibers, which is a method for producing a dry matter by drying fine cellulose fibers, the method comprising

   a chemical treatment step of chemically treating pulp; a fibrillation treatment step of fibrillating the pulp resulting from the chemical treatment step into fine cellulose fibers having an average fiber width of 1 nm to 1000 nm; and a drying step of drying a mixture in which the fine cellulose fibers fibrillated in the fibrillation treatment step are dispersed in water so that the mixture has a moisture content of 80% or less, which are performed in this order, the chemical treatment step performing a contact step of bringing pulp fibers constituting the pulp into contact with a reaction solution containing sulfamic acid having sulfo groups and urea dissolved in water; and a step of supplying the pulp resulting from the contact step (excluding absolute-dry pulp treated by depressurized drying performed in a desiccator having anhydrous calcium chloride) to a reaction step and introducing sulfo groups into a part of hydroxyl groups of cellulose constituting the pulp fibers in the reaction step, in this order, wherein:

   the reaction step is a step of heating the pulp fibers in contact with the reaction solution resulting from the contact step, thereby allowing a reaction to proceed,
   the reaction temperature is adjusted to 100°C to 180°C, and the reaction time is adjusted to 1 minute or more, and
   in the drying step of drying the mixture, the drying temperature satisfies any one of the following conditions (1) to (3) in relation to a sulfur introduction amount attributable to the sulfo groups of the fine cellulose fibers:

   (1) when the sulfur introduction amount is 0.5 mmol/g to 0.9 mmol/g (excluding 0.9 mmol/g), the drying temperature is 40°C or less;
   (2) when the sulfur introduction amount is 0.9 mmol/g to 1.4 mmol/g (excluding 1.4 mmol/g), the drying temperature is 70°C or less; and
   (3) when the sulfur introduction amount is 1.4 mmol/g to 3.0 mmol/g, the drying temperature is 120°C or less.

2. The method for producing a dry solid containing fine cellulose fibers according to claim 1, wherein

   Brookfield viscosity recovery rate of the mixture after the drying step determined by the following formula (1) is 30% or more,
   where the mixture obtained by dispersing the fine cellulose fibers resulting from the fibrillation treatment step in water at a solid concentration of 0.5% by mass is defined as a pre-drying dispersion liquid, and a dispersion liquid obtained by dispersing the mixture after the drying step in water at a solid concentration of 0.5% by mass is defined as a post-drying redispersion liquid.
   (Brookfield viscosity recovery rate)

$$\text{Brookfield viscosity recovery rate (\%)} = (\text{viscosity of post-drying redispersion liquid}) / (\text{viscosity of pre-drying dispersion liquid}) \times 100 \ \ldots (1)$$

   (Viscosity: viscosity mPa·s measured by a Brookfield viscometer at a temperature of 25°C, a rotation rate of 12 rpm, for 3 minutes)

3. The method for producing a dry solid containing fine cellulose fibers according to claim 1 or 2, wherein the mixture is subjected to depressurized drying at 480 hPa or less.

4. A dry solid containing fine cellulose fibers, which is a dry matter of a mixture containing water and fine cellulose fibers obtained by fibrillating cellulose fibers into fibers having an average fiber width of 1 nm to 1000 nm,

   the fine cellulose fibers being sulfonated fine cellulose fibers in which sulfo groups are introduced into a part of hydroxyl groups,
   an introduction amount of sulfur attributable to the sulfo groups being not less than 0.5 mmol/g and not more than 3.0 mmol/g, and

a dispersion liquid in which the dry matter is dispersed in water so that a solid concentration of the fine cellulose fibers is 0.5% by weight having a viscosity of 500 mPa·s or more when the viscosity is measured by rotating the dispersion liquid for 3 minutes at 25°C at a rotation speed of 12 rpm using a Brookfield viscometer.

5.  The dry solid containing fine cellulose fibers according to claim 4, wherein the dry matter has a moisture content of 80% or less.

6.  The dry solid containing fine cellulose fibers according to claim 4 or 5, wherein a haze value of a dispersion liquid obtained by dispersing the dry matter in water so that a solid concentration of the fine cellulose fibers is 0.5% by weight is 20% or less.

7.  The dry solid containing fine cellulose fibers according to claim 4, 5 or 6, wherein a total light transmittance of a dispersion liquid obtained by dispersing the dry matter in water so that a solid concentration of the fine cellulose fibers is 0.5% by weight is 95% or more.

8.  A fine cellulose fiber redispersion liquid in which the dry solid containing fine cellulose fibers according to any one of claims 4 to 7 is dispersed in water.

## FIG.1

Chemical Treatment Step S1

Contact Step S1A

↓

(Drying Step)

↓

Reaction Step S1B

↓

(Washing Step)

⇩

Fibrillation Treatment Step S2

(Sulfonated Fine Cellulose Fiber
Dispersion Liquid)

⇩

Drying Step S3

⇩

Dry Solid Containing Fine Cellulose
Fibers

# FIG.2

| | Type of Substituent | Functional Group Introduction Amount | Drying Method | Drying Temperature | Moisture Content After Drying | Total Light Transmittance | | Haze Value | | Brookfield Viscosity | | |
|---|---|---|---|---|---|---|---|---|---|---|---|---|
| | | | | | | Before Drying | After Redispersion | Before Drying | After Redispersion | Before Drying | After Redispersion | Recovery Rate |
| | | mmol/g | | °C | % | % | % | % | % | mPa·s | mPa·s | % |
| Comparative Example4 | Sulfo Group | 0.4 | Vacuum Drying | 10 | 10% or Less | 88.1 | 85.1 | 41.4 | 46.7 | 1830 | 180 | 9.8 |
| Example1 | Sulfo Group | 0.6 | Vacuum Drying | 10 | 10% or Less | 97.6 | 96.0 | 9.8 | 14.7 | 6800 | 2420 | 35.6 |
| Example3 | Sulfo Group | 0.9 | Vacuum Drying | 10 | 10% or Less | 99.4 | 99.0 | 2.3 | 2.7 | 3930 | 2720 | 69.2 |
| Example10 | Sulfo Group | 1.4 | Vacuum Drying | 10 | 10% or Less | 98.9 | 99.6 | 1.3 | 2.1 | 2690 | 2710 | 100.7 |
| Example11 | Sulfo Group | 1.4 | Heat Drying | 40 | 10% or Less | 98.9 | 99.3 | 1.3 | 2.2 | 2690 | 2570 | 95.5 |
| Example12 | Sulfo Group | 1.4 | Heat Drying | 70 | 10% or Less | 98.9 | 99.7 | 1.3 | 1.3 | 2690 | 2430 | 90.3 |
| Example13 | Sulfo Group | 1.4 | Heat Drying | 105 | 10% or Less | 98.9 | 99.3 | 1.3 | 1.2 | 2690 | 1410 | 52.4 |
| Example14 | Sulfo Group | 1.4 | Heat Drying | 105 | 43% | 98.9 | 99.3 | 1.3 | 0.9 | 2690 | 1800 | 66.9 |
| Example15 | Sulfo Group | 1.4 | Heat Drying | 105 | 77% | 98.9 | 99.3 | 1.3 | 0.9 | 2690 | 1940 | 72.1 |
| Example16 | Sulfo Group | 2.5 | Vacuum Drying | 10 | 10% or Less | 98.6 | 99.1 | 1.5 | 1.2 | 2680 | 2450 | 91.4 |
| Example18 | Sulfo Group | 2.5 | Heat Drying | 70 | 10% or Less | 98.6 | 99.7 | 1.5 | 1.3 | 2680 | 1760 | 65.7 |
| Example19 | Sulfo Group | 2.5 | Heat Drying | 105 | 10% or Less | 98.6 | 99.4 | 1.5 | 1.0 | 2680 | 1770 | 66.0 |
| Example20 | Sulfo Group | 2.5 | Heat Drying | 105 | 46% | 98.6 | 99.3 | 1.5 | 0.8 | 2680 | 1870 | 69.8 |
| Example21 | Sulfo Group | 2.5 | Heat Drying | 105 | 75% | 98.6 | 99.4 | 1.5 | 0.4 | 2680 | 1770 | 66.0 |
| Comparative Example8 | Phosphoric Acid Group | 1.0 | Vacuum Drying | 10 | 10% or Less | 99.3 | 97.3 | 2.3 | 6.5 | 8520 | 80 | 0.9 |
| Comparative Example14 | - | - | Vacuum Drying | 10 | 10% or Less | 24.3 | Measurement Failed | 89.8 | Measurement Failed | 110 | Measurement Failed | - |
| Comparative Example15 | - | - | Heat Drying | 105 | 10% or Less | 24.3 | Measurement Failed | 89.8 | Measurement Failed | 110 | Measurement Failed | - |
| Comparative Example16 | - | - | Heat Drying | 105 | 85% | 24.3 | Measurement Failed | 89.8 | Measurement Failed | 110 | Measurement Failed | - |

# FIG.3

| | Type of Substituent | Functional Group Introduction | Drying Method | Drying Temperature | Evaluation |
|---|---|---|---|---|---|
| | | mmol／g | | ℃ | |
| Comparative Example4 | Sulfo Group | 0.4 | Vacuum Drying | 10 | × |
| Comparative Example5 | Sulfo Group | 0.4 | Heat Drying | 40 | × |
| Comparative Example6 | Sulfo Group | 0.4 | Heat Drying | 70 | × |
| Comparative Example7 | Sulfo Group | 0.4 | Heat Drying | 105 | × |
| Example1 | Sulfo Group | 0.6 | Vacuum Drying | 10 | ○ |
| Example2 | Sulfo Group | 0.6 | Heat Drying | 40 | ○ |
| Comparative Example1 | Sulfo Group | 0.6 | Heat Drying | 70 | × |
| Comparative Example2 | Sulfo Group | 0.6 | Heat Drying | 105 | × |
| Example3 | Sulfo Group | 0.9 | Vacuum Drying | 10 | ◎ |
| Example4 | Sulfo Group | 0.9 | Heat Drying | 40 | ◎ |
| Example5 | Sulfo Group | 0.9 | Heat Drying | 70 | ○ |
| Comparative Example3 | Sulfo Group | 0.9 | Heat Drying | 105 | × |
| Example6 | Sulfo Group | 1.6 | Vacuum Drying | 10 | ◎ |
| Example7 | Sulfo Group | 1.6 | Heat Drying | 40 | ◎ |
| Example8 | Sulfo Group | 1.6 | Heat Drying | 70 | ◎ |
| Example9 | Sulfo Group | 1.6 | Heat Drying | 105 | ◎ |
| Example10 | Sulfo Group | 1.4 | Vacuum Drying | 10 | ◎ |
| Example11 | Sulfo Group | 1.4 | Heat Drying | 40 | ◎ |
| Example12 | Sulfo Group | 1.4 | Heat Drying | 70 | ◎ |
| Example13 | Sulfo Group | 1.4 | Heat Drying | 105 | ◎ |
| Example14 | Sulfo Group | 1.4 | Heat Drying | 105 | ◎ |
| Example15 | Sulfo Group | 1.4 | Heat Drying | 105 | ◎ |
| Example16 | Sulfo Group | 2.5 | Vacuum Drying | 10 | ◎ |
| Example17 | Sulfo Group | 2.5 | Heat Drying | 40 | ◎ |
| Example18 | Sulfo Group | 2.5 | Heat Drying | 70 | ◎ |
| Example19 | Sulfo Group | 2.5 | Heat Drying | 105 | ◎ |
| Example20 | Sulfo Group | 2.5 | Heat Drying | 105 | ◎ |
| Example21 | Sulfo Group | 2.5 | Heat Drying | 105 | ◎ |
| Comparative Example8 | Phosphoric Acid Group | 1.0 | Vacuum Drying | 10 | × |
| Comparative Example9 | Phosphoric Acid Group | 1.0 | Heat Drying | 40 | × |
| Comparative Example10 | Phosphoric Acid Group | 1.0 | Heat Drying | 70 | × |
| Comparative Example11 | Phosphoric Acid Group | 1.0 | Heat Drying | 105 | × |
| Comparative Example12 | Carboxy Group | 1.5 | Heat Drying | 105 | × |
| Comparative Example13 | Phosphorous Acid Group | 1.2 | Heat Drying | 105 | × |
| Comparative Example14 | - | - | Vacuum Drying | 10 | × |
| Comparative Example15 | - | - | Heat Drying | 105 | × |
| Comparative Example16 | - | - | Heat Drying | 105 | × |

# FIG.4

**INTERNATIONAL SEARCH REPORT**

| International application No. |
|---|
| PCT/JP2019/048997 |

A.   CLASSIFICATION OF SUBJECT MATTER
C08J 3/16(2006.01)i; C08B 5/00(2006.01)i
FI: C08J3/16; C08B5/00
According to International Patent Classification (IPC) or to both national classification and IPC

B.   FIELDS SEARCHED

Minimum documentation searched (classification system followed by classification symbols)
C08J3/00-3/28; C08B1/00-37/18; C07H1/00-99/00; D21H11/00-27/42; D01F1/00-6/96; 9/00-9/04; C09D1/00-10/00; 101/00-201/10; B32B1/00-43/00

| Documentation searched other than minimum documentation to the extent that such documents are included in the fields searched | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| P, A | JP 2019-11411 A (DKS CO., LTD.) 24.01.2019 (2019-01-24) claim 1, paragraphs [0041]-[0044], examples, table 1 | 1-8 |
| A | US 2511229 A (E. I. DU PONT DE NEMOURS & COMPANY) 13.06.1950 (1950-06-13) claims, column 1, lines 1-30, example 1 | 1-8 |
| A | JP 2003-313201 A (WAKAMOTO PHARMACEUTICAL CO., LTD.) 06.11.2003 (2003-11-06) claim 1, paragraphs [0028], [0036] | 1-8 |
| A | JP 52-13585 A (LION FAT AND OIL CO., LTD.) 01.02.1977 (1977-02-01) claims, page 3, upper left column, line 16 to upper right column, line 18, examples | 1-8 |

☒  Further documents are listed in the continuation of Box C.      ☒  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 05 March 2020 (05.03.2020) | 17 March 2020 (17.03.2020) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

International application No.

PCT/JP2019/048997

C (Continuation). DOCUMENTS CONSIDERED TO BE RELEVANT

| Category* | Citation of document, with indication, where appropriate, of the relevant passages | Relevant to claim No. |
|---|---|---|
| A | JP 2017-57292 A (OJI HOLDINGS CORPORATION) 23.03.2017 (2017-03-23) claims 1, 4-5, 8-9, paragraphs [0019]-[0020], [0023], [0034], [0046]-[0050], [0056]-[0057], [0060]-[0061], [0065], [0070]-[0075], examples 7-11 | 1-8 |

Form PCT/ISA/210 (continuation of second sheet) (January 2015)

| INTERNATIONAL SEARCH REPORT | | International application No. | |
|---|---|---|---|
| Information on patent family members | | PCT/JP2019/048997 | |

| Patent Documents referred in the Report | Publication Date | Patent Family | Publication Date |
|---|---|---|---|
| JP 2019-11411 A | 24 Jan. 2019 | (Family: none) | |
| US 2511229 A | 13 Jun. 1950 | (Family: none) | |
| JP 2003-313201 A | 06 Nov. 2003 | (Family: none) | |
| JP 52-13585 A | 01 Feb. 1977 | (Family: none) | |
| JP 2017-57292 A | 23 Mar. 2017 | US 2018/0265597 A1 claims 18, 20, 25, 29, 34, paragraphs [0087]-[0089], [0093], [0104], [0122]-[0127], [0129], [0157], [0193], [0199], [0222]-[0227], examples E8-E11 EP 3351562 A1 KR 10-2018-0050739 A CN 108137710 A | |

Form PCT/ISA/210 (patent family annex) (January 2015)

**EP 3 901 195 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017002136 A